# EUROPÄISCHE PATENTSCHRIFT

(11) **EP 2 054 991 B1**
(45) Veröffentlichungstag und Bekanntmachung des Hinweises auf die Patenterteilung: **13.01.2016**
(21) Anmeldenummer: 07819921.3
(22) Anmeldetag: 02.08.2007
(51) Int. Cl.: H02K 1/16, H02K 3/28

(54) **STATOR FÜR EINEN ELEKTRISCHEN ANTRIEBSMOTOR**
STATOR FOR AN ELECTRIC DRIVE MOTOR
STATOR POUR UN MOTEUR ÉLECTRIQUE D'ENTRAÎNEMENT

(30) Priorität: 15.08.2006 DE 102006038327; 22.03.2007 DE 102007013680
(43) Veröffentlichungstag der Anmeldung: 06.05.2009
(73) Patentinhaber: Robert Bosch GmbH, 70442 Stuttgart (DE)
(72) Erfinder: KRAUTH, Wolfgang, 77855 Achern-Sasbachried (DE); TIMM, Eike Hermann, 76532 Baden-Baden (DE)
(86) Internationale Anmeldenummer: PCT/EP2007/058023
(87) Internationale Veröffentlichungsnummer: WO 2008/019954

(56) Entgegenhaltungen:
- DE-A1- 19 838 335
- DE-U1-202006 002 279
- GB-A- 1 543 150
- JP-A- 5 022 912
- JP-A- 7 075 306
- JP-A- 59 222 051
- US-A- 4 038 575
- US-A- 4 260 925
- US-A- 4 591 766
- US-A- 4 935 653
- VIN MEHTA: "HOW TO DROP THE CEILING ON FAN NOISE" MACHINE DESIGN, PENTON MEDIA, CLEVELAND, OH, US, Bd. 63, Nr. 21, 24. Oktober 1991 (1991-10-24), Seiten 103-106, XP000274101 ISSN: 0024-9114

## Beschreibung

### Stand der Technik

Die Erfindung betrifft einen Stator für einen elektrischen Antriebsmotor mit einer Anzahl durch Nuten getrennter Statorzähne und mit einer mehrsträngigen Wicklung, insbesondere Drehstromwicklung, wobei ein Strang mehrere Spulen umfasst und einzelne Spulen jeweils mehrere Zähne umfassen. Genutete Statoren für elektrische Antriebsmotoren mit einer Anzahl symmetrischer Statorzähne und einer mehrsträngigen Drehstromwicklung sind bekannt.

Ein Beispiel für einen bekannten Stator ist in der deutschen Patentanmeldung DE 198 38 335 A1 beschrieben. Der in der genannten Schrift beschriebene Stator zeigt eine Anzahl durch Nuten getrennter Statorzähne und eine mehrsträngige Wicklung, die insbesondere als Drehstromwicklung realisiert sein kann. Dabei umfasst ein Strang mehrere Spulen und einzelne Spulen umfassen jeweils mehrere Zähne, wobei jeweils mehrere Statorzähne zu einem Statorzahn mit mehreren Zahnköpfen zusammengefasst sind.

Mit der US4591766 ist ein Stator eines Elektromotors bekannt geworden, der Y-förmige Statorzähne aufweist. Dabei sind einerseits Spulen am radial inneren Zahnhals der Statorzähne angeordnet, und andererseits Spulen um zwei benachbarte Arme unterschiedlicher Statorzähne im radial äußeren Bereich gewickelt.

Bekanntlich wird der Wirkungsgrad eines Stators wesentlich von seiner Nutfüllung, d. h. dem gesamten Leiterquerschnitt in Bezug auf die Gesamtfläche des Stators, bestimmt.

### Vorteile der Erfindung

Der erfindungsgemäße Stator für einen elektrischen Antriebsmotor zeigt eine Anzahl durch Nuten getrennter Statorzähne; dabei sind die Statorzähne von einer mehrsträngigen Wicklung umwickelt. Ein Strang umfasst mehrere Spulen und einzelne Spulen umfassen jeweils mehrere Zähne. Dabei sind jeweils zwei Zähne auf Höhe ihres Zahnhalses zu einem zusammengefassten Statorzahn kombiniert. Der Vorteil dieser erfindungsgemäßen Maßnahme besteht in einer besseren Ausnutzung des Bauvolumens durch eine neuartige Anordnung des durch die beschriebene Gestaltung der Statorzähne entstehenden Wickelraumes unter Wahrung der Wickelbarkeit des erfindungsgemäßen Stators unter Verwendung der vorhandenen Wickeltechnologien (Flyer-, Einzugs-, Stab- bzw. Nadelwickeltechnik). Diese Maßnahme führt zu einer Leistungssteigerung bzw. Verkleinerung des mit dem erfindungsgemäßen Stator ausgestatteten Elektromotor, wodurch sich eine Materialeinsparung und ein besseres Leistungsdichte/Kostenverhältnis realisieren lässt. Wesentlich für die Erfindung ist, dass eine Spule jeweils zwei Zahnköpfe benachbarter Zähne umfasst und jeweils ein Zahnfuß von einer weiteren Spule umfasst ist. Dabei ist der Stator derart ausgeführt, dass die Statorzähne in der Weise ausgestaltet sind, dass die Spulen um die Zahnfüße und die Spulen um die Zahnköpfe ähnliche Parameter wie bspw. eine ähnliche Flussverkettung zeigen.

Eine vorteilhafte Variante der Erfindung besteht darin, dass jeder Statorzahn umwickelt ist und/oder sowohl die Zahnfüße als auch die Zahnköpfe umwickelt sind.

In einer weiteren vorteilhaften Ausführungsform der Erfindung befinden sich auf dem Statorumfang lediglich zusammengefasste Zähne.

Eine weitere Variante der Erfindung besteht darin, dass für eine Phase gleichzeitig bestromte Spulen benachbarter Zähne gegensinnig gewickelt sind.

Die Wickelbarkeit des erfindungsgemäßen Stators kann dadurch erhöht werden, dass auf dem Statorumfang abwechselnd Statorzähne mit einer ersten und einer zweiten geometrischen Form angeordnet sind, so dass sich zwischen den Statorzähnen asymmetrische Nuten ausbilden. In diesem Fall hat es sich ferner bewährt, wenn die Zahnfüßen einer der beiden geometrischen Formen nicht von Spuien umwickelt sind.

Eine weitere vorteilhafte Ausführungsform der Erfindung besteht darin, dass alle Stränge der Wicklung sowohl an den Zahnfüßen als auch an den Zahnköpfen gewickelt sind und sich symmetrisch verhalten; dabei können alle Spulen gleichsinnig auf den Statorköpfen bzw. Statorfüßen gewickelt sein.

Nachfolgend sind anhand der Zeichnungen Ausführungsbeispiele der Erfindung prinzipmäßig beschrieben.

### Kurzbeschreibung der Zeichnungen

Es zeigen:
- Figur 1: eine schematische Darstellung einer ersten Ausführungsform des erfindungsgemäßen Stators;
- Figur 2: eine Darstellung der Flusspfade anhand der magnetischen Feldlinien in dem Fall, in dem die außenliegenden Spulen 5 bestromt sind;
- Figur 3: eine Darstellung der Flusspfade anhand der magnetischen Feldlinien in dem Fall, in dem die innenliegenden Spulen 6 bestromt sind;
- Figur 4: eine Variante der Geometrie des erfindungsgemäßen Stators, bei dem die Form und Anordnung der Statorzähne hinsichtlich der Wickelbarkeit optimiert wurde;
- Figur 5: eine M4-Schaltung zur Ansteuerung des erfindungsgemäßen Stators;
- Figur 6: eine 2H-Schaltung zur Ansteuerung des erfindungsgemäßen Stators;
- Figur 7: eine Variante zur Wicklung des erfindungsgemäßen Stators für mehrphasige Elektromotoren, und
- Figur 8: die Flusspfade, die sich bei der in Fig. 7 dargestellten Ausführungsform ausprägen.

### Beschreibung von Ausführungsbeispielen

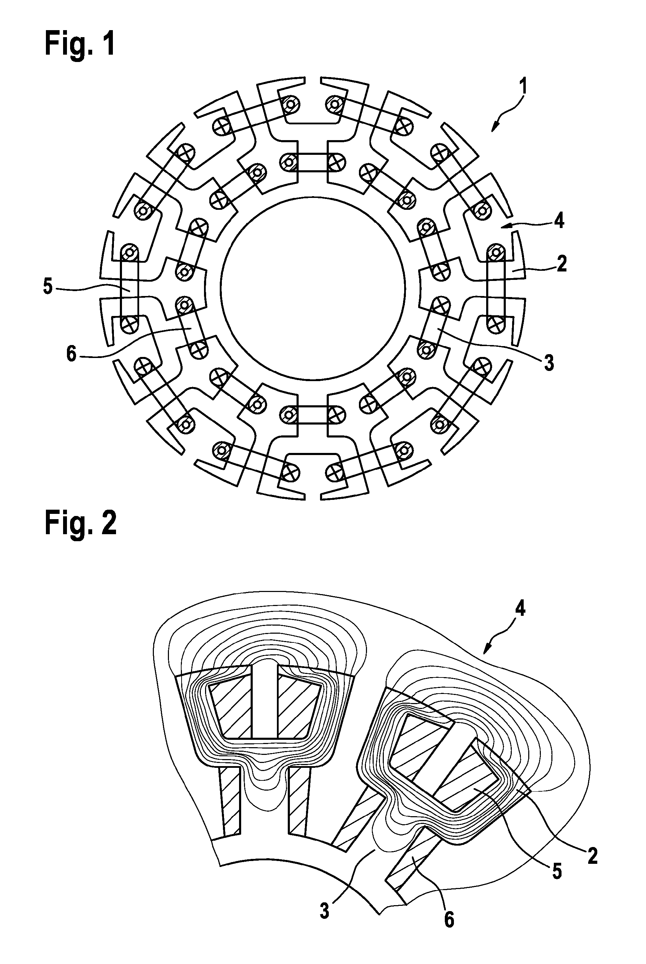

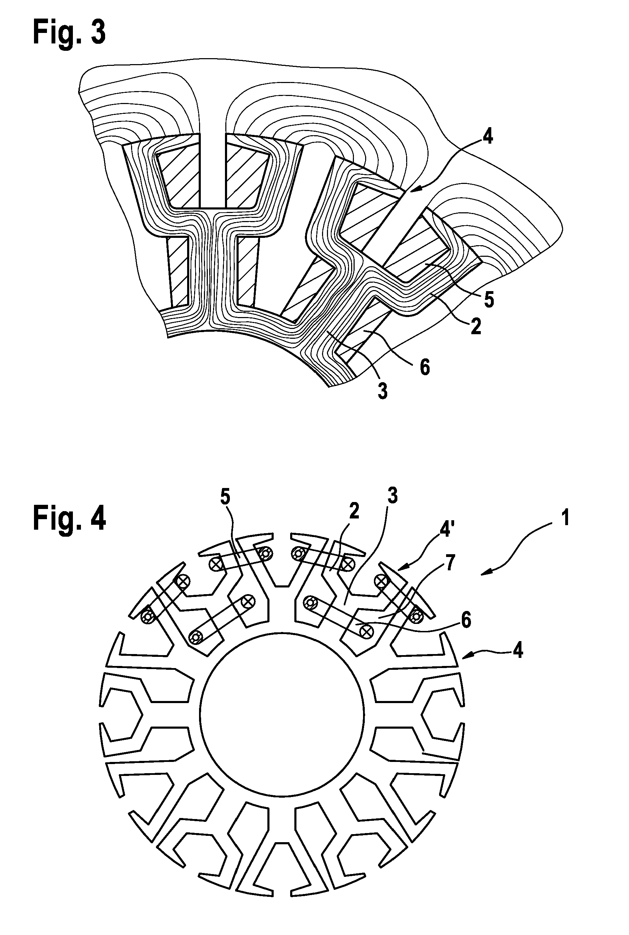

Figur 1 zeigt eine schematische Darstellung einer ersten Ausführungsform des erfindungsgemäßen Stators 1. Der Stator 1 zeigt dabei an seinem Außenumfang die zusammengefassten Statorzähne 4', die ihrerseits jeweils aus zwei Zahnköpfen 2 und einem Zahnfuß 3 bestehen. Aus Figur 1 wird deutlich, dass der gezeigte Zuschnitt des Stators 1 sowohl für den Fluss der innenliegenden Spulen 6 als auch für den Fluss der außenliegenden Spulen 5 einen vergleichbaren Statorzahn im Luftspalt ausbildet. Dabei wird von jeder Wicklung der Spulen 5 bzw. 6 derjenige Teil des Stators direkt durchflutet, den sie umschließt. Dabei besteht die Möglichkeit, etwaige auftretende geringfügige Unterschiede in der Flussverkettung zwischen innenliegenden Spulen 6 und außenliegenden Spulen 5 durch die Windungszahl auszugleichen. Es ist darüber hinaus vorteilhaft, die Geometrie des Stators 1 so zu wählen, dass der magnetische Widerstand des oberen Flusspfades sich nur geringfügig vom magnetischen Widerstand des unteren Flusspfades über den Zahnfuß 3 und das innere Joch unterscheidet. Unter dem oberen Flusspfad wird dabei derjenige magnetische Flusspfad verstanden, der sich ergibt, wenn die außenliegenden Spulen 5 bestromt sind. Entsprechend wird unter dem unteren Flusspfad derjenige magnetische Flusspfad verstanden, der sich ergibt, wenn die innenliegenden Spulen 6 bestromt sind. In den Figuren 2 bzw. 3 sind die entsprechenden Flusspfade anhand der magnetischen Feldlinien dargestellt. Dabei ist in Figur 2 der Fall gezeigt, dass die außenliegenden Spulen 5 bestromt sind, während in Figur 3 der Fall dargestellt ist, dass die innenliegenden Spulen 6 bestromt sind.

Aus den vorstehenden Figuren 1 bis 3 wird darüber hinaus deutlich, dass die geometrische Gestaltung des erfindungsgemäßen Stators 1 zu einer einfachen Statorgeometrie führt, bei dem sich Hilfszähne, die den Wickelraum einschränken würden, erübrigen. Derartige Hilfszähne hätten den Nachteil, dass sie einerseits allein durch ihr Vorhandensein den zur Verfügung stehenden Wickelraum einschränken und andererseits die anteilige Abdeckung des Luftspaltes mit Blech verringern. Dies resultiert aus der größeren Anzahl an Nuten, die wegen der Wickeltechnik eine Mindestbreite haben. Bei steigender Nutzahl geht dies vom Blech ab, unabhängig davon, ob die Nuten durch Hilfs- oder Hauptzähne erzeugt werden. Eine ähnliche Wirkung hat auch die Gestaltung der erfindungsgemäßen Statorzähne mit lediglich zwei Zahnköpfen 2.

Aus Figur 1 geht darüber hinaus hervor, dass die gleichzeitig bestromten Spulen einer Phase bzw. der dazugehörigen Gegenphase bezogen auf die Spule des benachbarten Statorzahnes immer gegensinnig gewickelt sind. Dieser Effekt lässt sich alternativ auch durch ein gleichsinniges Wickeln der Spulen 5 bzw. 6 und eine gegensinnige Bestromung bei entsprechend gewählter Verschaltung der Spulen 5 bzw. 6 erreichen. Die in Figur 2 abgebildeten Wicklungen enthalten bei einer M4-Verschaltung Lagen für die Hin- und Rückphase; sie sind damit also mindestens zweilagig ausgeführt. Hierauf kann bei einer 2H-Schaltung verzichtet werden, da hier keine gewickelte Gegenphase benötigt wird. Gute Möglichkeiten der Wicklungsanpassung lassen sich dadurch realisieren, dass die Wicklungen sowohl im inneren wie auch im äußeren Bereich des Stators 1 verteilt werden können; hierdurch lassen sich zahninterne Parallelschaltungen mit zeitintensiven Anhak- bzw. Verfahr- und Verlegevorgängen auf andere Wickelpositionen wirksam unterdrücken.

Bei einfacher Wicklung (ohne Gegenphase) ist dieselbe Anordnung auch mit 2H-Schaltung zu betreiben.

Figur 4 zeigt eine Variante der Geometrie des erfindungsgemäßen Stators 1, bei dem die Form und Anordnung der Statorzähne 4 dahingehend optimiert wurde, die Wickelbarkeit mit der Flyer-Wickeltechnik zu verbessern und damit die Zykluszeit beim Wickeln zu verringern. Die Wahl der Geometrie der Statorzähne 4 erfolgt dabei dahingehend, dass sich jeweils unterschiedlich geformte Statorzähne 4 und 4' auf dem Umfang des Stators 1 abwechseln. Im vorliegenden Ausführungsbeispiel wird nur noch jeder zweite Statorzahn mit einer innenliegenden Spule 6 versehen. Diese innenliegende Spule 6 wird mit ungefähr doppelter Windungszahl wie die außenliegende Spule 5 ausgeführt. Die in Figur 4 dargestellten, im Bereich des Zahnkopfes 2 näherungsweise dreieckförmigen Statorzähne 4 werden im Bereich ihres Zahnfußes 3 nicht mehr mit einer innenliegenden Spule 6 umwickelt. Die durch die abwechselnd unterschiedliche Geometrie der Statorzähne 4 und 4' bedingte Asymmetrie der zwischen den Statorzähnen 4 und 4' gebildeten Nuten 7 bedingt, dass sich insbesondere die Zahnfüße 3 der Statorzähne 4' mit nicht näherungsweise dreieckförmigem Zahnkopf 2 durch die genannte Flyer-Wickeltechnik gut mit den innenliegenden Spulen 6 umwickeln lassen. Die gewählte Geometrie der Nut 7 zeichnet sich dadurch aus, dass sich gesehen vom Umfang des Stators 1 her vom an seinem Zahnfuß 3 umwickelten Statorzahn 4' weg kein Hinterschnitt nach außen ergibt.

Die Wicklung der außenliegenden Spulen 5 wird wie bei der in Figur 1 beschriebenen Statorgeometrie mit gleichbleibender Zahn- und Nutgeometrie unverändert ausgeführt.

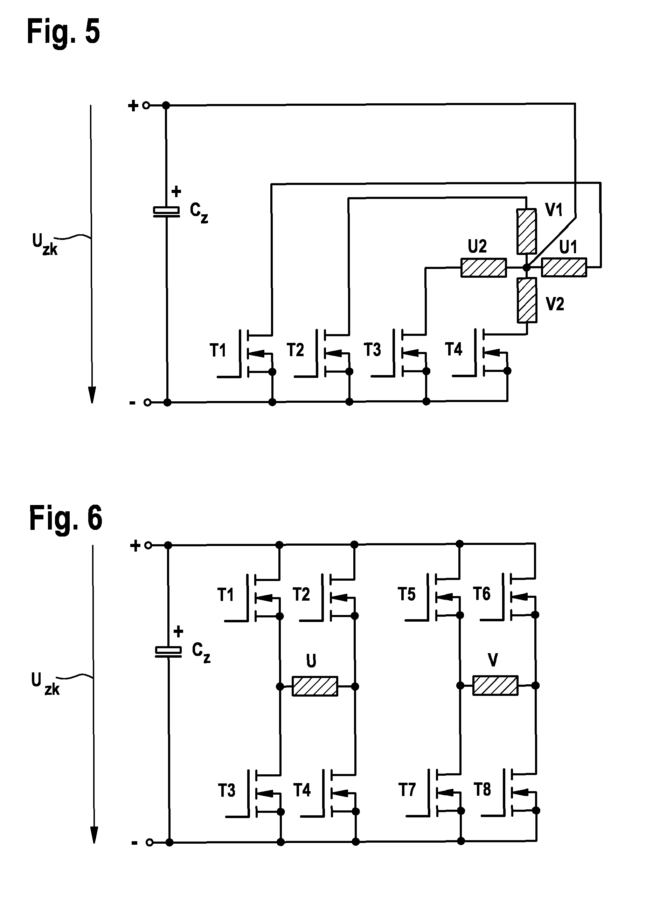

Auch in diesem Fall sind für die Leistungsparameter des Motors die Anzahl der Windungen pro Nut 7 und die Summe der davon erzeugten Durchflutung ausschlaggebend. Bei der in Fig. 1 gezeigten Statorgeometrie ist die innenliegende Spule 6 immer in abwechselndem Wickelsinn gewickelt bzw. bestromt. Dadurch addiert sich die Durchflutung der innenliegenden Spulen von benachbarten Statorzähnen 4, die in der gleichen Nut 7 liegen. Dies entfällt bei der in Figur 4 gezeigten Statorgeometrie. Die innenliegenden Spulen 5 werden alle gleichsinnig ausgeführt (immer noch zweilagig für Hin-und Gegenphase), so dass die Nutdurchflutung sich vom Statorumfang her betrachtet nicht verändert, vgl. Fig. 1 und 4. Die beschriebene Statorgeometrie in Verbindung mit der oben beschriebenen Wicklung lässt sich insbesondere durch eine in Fig. 5 dargestellte sogenannte M4-Schaltung ansteuern. Die innenliegenden Spulen 6 entsprächen dabei beispielsweise der Phase U1 und der Gegenphase U2, die außenliegenden Spulen 5 demnach den Phasen V1 und V2. Die unterschiedlichen Bestromungsrichtungen werden dabei durch den entgegengesetzten Wickelsinn von Hin- und Gegenphase erzielt.

Mit einer einfachen Wicklung (ohne Gegenphase) lässt sich dieselbe Anordnung auch mit der in Fig. 6 dargestellten 2H-Schaltung betreiben. Die inneren Wicklungen entsprächen dabei beispielsweise der Phase U, die äußeren der Phase V. Die unterschiedlichen Bestromungsrichtungen werden durch die Vollbrückenschaltung möglich, es bedarf keiner gewickelten Gegenphase wie bei der M4-Schaltung bei einer ansonsten identischen Anordnung.

Die Figuren 5 und 6 zeigen die betrachteten schaltungstechnischen Ausführungen von zweisträngigen Motoren. Figur 5 zeigt die Mittelpunktschaltung, zweisträngig, jeweils mit Hin-und Gegenphase, daher wird diese Schaltung auch als M4-Schaltung bezeichnet. Figur 6 zeigt die Schaltung mit zwei Vollbrücken bzw. H-Brücken ohne in Kupfer vorliegenden Gegenphasen.

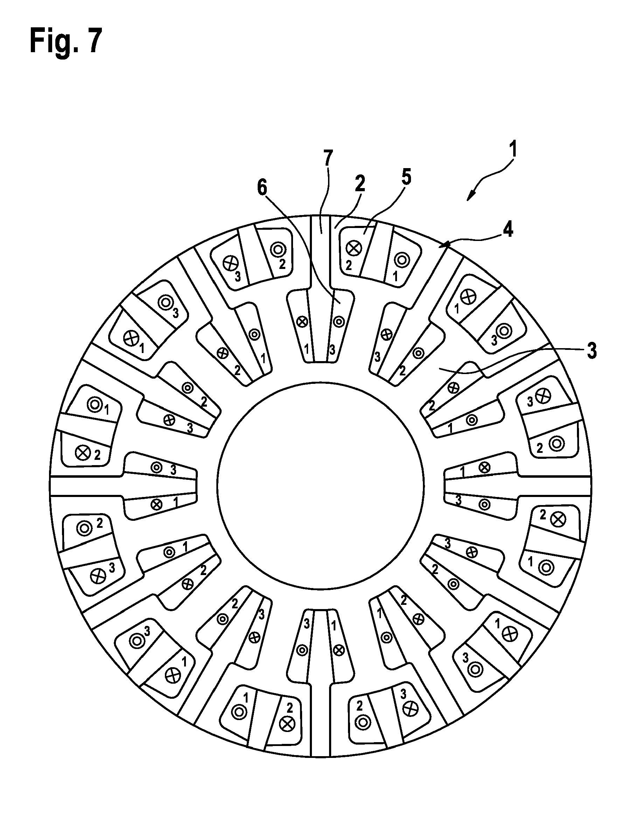

Fig. 7 zeigt eine Variante zur Wicklung des erfindungsgemäßen Stators, durch den sich die Vorteile der erfindungsgemäßen Lösung auf mehrphasige Elektromotoren übertragen lassen.

Auch in dieser Ausführungsform liegt ein wesentlicher Vorteil der Erfindung in einer effektiven Verdopplung der Zahnzahl im Luftspalt, während nur die Hälfte der Statorzähne 4 im Luftspalt auch effektiv als Statorzahn 4 in den der Statorachse zugewandten Bereich der Nut 7 geführt wird. Im Unterschied zu der in Fig. 1 bzw. Fig. 4 gezeigten Statorgeometrie ist die Statorgeometrie gemäß der in Fig. 7 gezeigten Ausführungsform den Anforderungen der N-Phasigkeit angepasst. Darüber hinaus bieten andere Nut/Polzahl-Verhältnisse Vorteile beim Rastmoment und bei Geräuschanregungen, die bei einem 2-phasigen Motor durch erhöhte Schrägung vermieden werden müssen, was die verbesserte Leistungsdichte teilweise wieder kompensiert. Auch im vorliegenden Beispiel ergeben sich in vorteilhafter Weise aufgrund der verteilten Wicklung verminderte Wickelköpfe, d. h. geringe nicht genutzte Anteile der Spulen. Die Polzahl wird wie bei einem permanentmagneterregten EC-Motor mit doppelter Zahnzahl gewählt.

Der wesentliche Unterschied zu den vorstehend gezeigten Ausführungsformen besteht darin, dass im in Fig. 7 gezeigten Beispiel alle drei mit den Buchstaben a-c bezeichneten Stränge jeweils auf innenliegenden Spulen 6 wie auch auf außenliegenden Spulen 5 außen verteilt sind. Wie auch in den in Figur 1 bzw. 4 gezeigten Beispielen sind auch in diesem Fall die Wicklungen als Einzelzahnwicklungen ausgeführt und der Wickelkopf schließt sich jeweils zwischen den mit dem gleichen Buchstaben a-c gekennzeichneten Bereichen der Nuten 7 über den jeweiligen Statorzähnen 4. Ferner werden alle Wicklungen gleichsinnig gewickelt. Dies bietet die Möglichkeit, bei entsprechender Verschaltung, Asymmetrien zu vermeiden, die bei einem zweiphasigen Motor mit einem Stator 1 gemäß Fig. 1 bzw. Fig. 4 zwischen der innenliegenden und der außenliegenden Phase entstehen.

Auch im in Fig. 7 dargestellten Fall ist bei der Rastmomentoptimierung darauf zu achten, dass der magnetische Widerstand des oberen Flusspfades sich nur geringfügig vom magnetischen Widerstand des unteren Flusspfades über den Zahnfuß und das innere Joch unterscheidet.

Da sich aufgrund anderer Polzahlen bei der dreisträngigen Maschine mit dem in Fig. 7 dargestellten Stator 1 auch andere Flusspfade ausprägen, lässt sich der Querschnitt des Zahnfußes 3 eher verringern, als dass er wie in den in Fig. 1 bzw. 3 beschriebenen Beispielen verstärkt werden müsste.

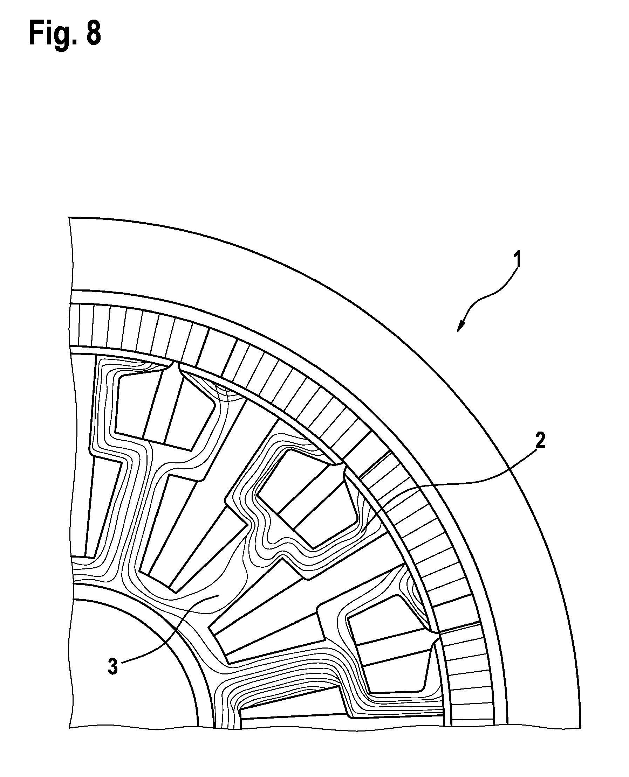

Fig. 8 zeigt die Flusspfade, die sich bei der in Fig. 7 dargestellten Ausführungsform ausprägen. Im vorliegenden Fall summiert sich der Fluss aus zwei Zahnköpfen wie bei der 2-phasigen Maschine nicht im Zahnfuß 3 auf. Entweder nimmt der Fluss allein den oberen Flusspfad wie im mittleren Statorzahn in Fig. 8 zu sehen oder schließt sich über einen Zahnkopf 2 und das innere Joch hin zum Nachbarzahn. Er wird aber im Luftspalt nicht über beiden kompletten Zahnköpfen gesammelt, da der Magnetwinkel kleiner als der Spulen-/Zahnwinkel ist. Aus diesem Grund ist der Zahnfuß 3 keinen hohen Flussspitzen ausgesetzt. Die in den Figuren 1 und 4 gezeigte einfache Statorgeometrie bleibt ansonsten prinzipiell erhalten. Für N-phasigkeit sollte die Anzahl der Statorzähne 4 durch N teilbar sein, wie hier exemplarisch für N=3 gezeigt. Die Polzahl wird wie für eine klassische, permanentmagneterregte Maschine gewählt, wobei ein zusammengefasster Statorzahn für zwei konventionelle Zähne steht.

## Patentansprüche

1. Stator (1) für einen elektrischen Antriebsmotor mit einer Anzahl durch Nuten (7) getrennter Statorzähne (4), wobei Statorzähne (4) von einer mehrsträngigen Wicklung umwickelt sind und wobei ein Strang mehrere Spulen (5,6) umfasst und einzelne Spulen (5,6) jeweils mehrere Statorzähne (4) umfassen und mehrere Statorzähne (4) vorzugsweise auf Höhe ihres Zahnhalses zu einem zusammengefassten Statorzahn (4) mit einem Zahnfuß (3) und mehreren Zahnköpfen (2) kombiniert sind, wobei jeweils zwei Statorzähne (4) zu einem zusammengefassten Statorzahn (4) kombiniert sind, und eine Spule (5) jeweils zwei Zahnköpfe (2) benachbarter Statorzähne (4) umfasst und jeweils ein Zahnfuß (3) von einer weiteren Spule (6) umfasst ist, **dadurch gekennzeichnet, dass** die Statorzähne (4) in der Weise ausgestaltet sind, dass die Spulen (5,6) um die Zahnfüße (3) und die Spulen (5,6) um die Zahnköpfe (2) eine ähnliche Flussverkettung zeigen, wobei etwaige auftretende geringfügige Unterschiede in der Flussverkettung zwischen innenliegenden Spulen (6) und außenliegenden Spulen (5) durch die Windungszahl ausgleichen werden.

2. Stator (1) nach Anspruch 1, **dadurch gekennzeichnet, dass** jeder Statorzahn (4) umwickelt ist.

3. Stator (1) nach einem der vorangehenden Ansprüche, **dadurch gekennzeichnet, dass** sowohl die Zahnfüße (3) als auch die Zahnköpfe (2) umwickelt sind.

4. Stator (1) nach einem der vorangehenden Ansprüche, **dadurch gekennzeichnet, dass**, der magnetische Widerstand des oberen Fiusspfades sich nur geringfügig vom magnetischen Widerstand des unteren Flusspfades über den Zahnfuß (3) und das innere Joch unterscheidet, wobei unter dem oberen Flusspfad derjenige magnetische Flusspfad verstanden wird, der sich ergibt, wenn die außenliegenden Spulen (5) bestromte sind, und unter dem unteren Flusspfad derjenige magnetische Fiusspfad verstanden, der sich ergibt, wenn die innenliegenden Spulen (6) bestromt sind.

5. Stator (1) nach einem der vorangehenden Ansprüche, **dadurch gekennzeichnet, dass** die Wicklung mittels Flyerwickeln oder Einzugswickeln oder Nadelwickeln gewickelt ist.

6. Stator (1) nach Anspruch 4, **dadurch gekennzeichnet, dass** die Statorzähne in der Weise ausgestaltet sind, dass die Spulen (5,6) um die Zahnfüße (3) und die Spulen (5,6) um die Zahnköpfe (2) ähnliche Parameter wie bspw. eine ähnliche Flussverkettung zeigen.

7. Stator (1) nach einem der vorangehenden Ansprüche, **dadurch gekennzeichnet, dass** sich auf dem Statorumfang lediglich zusammengefasste Statorzähne (4) befinden.

8. Stator (1) nach einem der vorangehenden Ansprüche, **dadurch gekennzeichnet, dass** für eine Phase gleichzeitig bestromte Spulen (5,6) benachbarter Statorzähne (4) gegensinnig gewickelt sind.

9. Stator (1) nach einem der vorangehenden Ansprüche, **dadurch gekennzeichnet, dass** auf dem Statorumfang abwechselnd Statorzähne (4, 4') mit einer ersten und einer zweiten geometrischen Form angeordnet sind, so dass sich zwischen den Statorzähnen (4, 4') asymmetrische Nuten (7) ausbilden.

10. Stator (1) nach Anspruch 8, **dadurch gekennzeichnet, dass** die Zahnfüße (3) einer der beiden geometrischen Formen nicht von Spulen (6) umwickelt sind.

11. Stator (1) nach Anspruch 1, **dadurch gekennzeichnet, dass** alle Stränge der Wicklung sowohl an den Zahnfüßen (3) als auch an den Zahnköpfen (2) gewickelt sind und sich symmetrisch verhalten.

12. Stator (1) nach Anspruch 10, **dadurch gekennzeichnet, dass** alle Spulen (5,6) gleichsinnig auf den Zahnköpfen (2) bzw. Zahnfüßen (3) gewickelt sind.

## Claims

1. Stator (1) for an electric drive motor having a number of stator teeth (4) which are separated by slots (7), with a multiple-section winding being wound around stator teeth (4) and with one section comprising a plurality of coils (5, 6) and with individual coils (5, 6) each surrounding a plurality of stator teeth (4), and with a plurality of stator teeth (4) preferably being combined at the level of their tooth neck to form one combined stator tooth (4) with one tooth foot (3) and a plurality of tooth heads (2), wherein two stator teeth (4) are in each case combined to form one combined stator tooth (4), and a coil (5) in each case surrounds two tooth heads (2) of adjacent stator teeth (4), and in each case one tooth foot (3) is surrounded by a further coil (6), **characterized in that** the stator teeth (4) are designed in such a manner that the coils (5, 6) around the tooth feet (3) and the coils (5, 6) around the tooth heads (2) have a similar flux chain, wherein any minor differences which occur in the flux chain between inner coils (6) and outer coils (5) are compensated for by the number of turns.

2. Stator (1) according to Claim 1, **characterized in that** each stator tooth (4) is wound around.

3. Stator (1) according to one of the preceding claims, **characterized in that** both the tooth feet (3) and the tooth heads (2) are wound around.

4. Stator (1) according to one of the preceding claims, **characterized in that** the magnetic reluctance of the upper flux path differs only slightly from the magnetic reluctance of the lower flux path via the tooth foot (3) and the inner yoke, wherein the expression the upper flux path means that magnetic flux path which results when current is passed through the outer coils (5), and the lower flux path means that magnetic flux path which results when current is passed through the inner coils (6).

5. Stator (1) according to one of the preceding claims, **characterized in that** the winding is wound by means of flyer winding or pull-in winding or needle winding.

6. Stator (1) according to Claim 4, **characterized in that** the stator teeth are designed in such a manner that the coils (5,6) around the tooth feet (3) and the coils (5,6) around the tooth heads (2) have similar parameters to, for example, a similar flux chain.

7. Stator (1) according to one of the preceding claims, **characterized in that** only combined stator teeth (4) are located on the stator circumference.

8. Stator (1) according to one of the preceding claims, **characterized in that** coils (5, 6), through which current flows for one phase at the same time, of adjacent stator teeth (4) are wound in opposite senses.

9. Stator (1) according to one of the preceding claims, **characterized in that** stator teeth (4, 4') with a first and a second geometric shape are arranged alternately on the stator circumference, such that asymmetric slots (7) are formed between the stator teeth (4, 4').

10. Stator (1) according to Claim 8, **characterized in that** the tooth feet (3) on one of the two geometric shapes do not have coils (6) wound around them.

11. Stator (1) according to Claim 1, **characterized in that** all the sections of the winding are wound and are symmetrical both on the tooth feet (3) and on the tooth heads (2).

12. Stator (1) according to Claim 10, **characterized in that** all the coils (5, 6) are wound in the same sense on the tooth heads (2) and the tooth feet (3).

## Revendications

1. Stator (1) pour un moteur d'entraînement électrique comprenant une pluralité de dents de stator (4) séparées par des rainures (7), les dents de stator (4) étant enveloppées par un enroulement à plusieurs branches et une branche comprenant plusieurs bobines (5, 6) et les bobines (5, 6) individuelles comprenant respectivement plusieurs dents de stator (4) et plusieurs dents de stator (4) étant combinées, de préférence au niveau de leur col de dent, en une dent de stator (4) regroupée munie d'un pied de dent (3) et de plusieurs têtes de dent (2), deux dents de stator (4) étant respectivement combinée en une dent de stator (4) regroupée, et une bobine (5) comprenant à chaque fois deux têtes de dent (2) de dents de stator (4) voisines et comprenant à chaque fois un pied de dent (3) d'une bobine supplémentaire (6), **caractérisé en ce que** les dents de stator (4) sont configurées de telle sorte que les bobines (5, 6) autour des pieds de dent (3) et les bobines (5, 6) autour des têtes de dent (2) présentent un enchaînement des flux similaire, les légères différences qui se produisent éventuellement dans l'enchaînement des flux entre les bobines du côté intérieur (6) et les bobines du côté extérieur (5) étant compensées par le nombre d'enroulements.

2. Stator (1) selon la revendication 1, **caractérisé en ce que** chaque dent de stator (4) est enveloppée.

3. Stator (1) selon l'une des revendications précédentes, **caractérisé en ce que** les pieds de dent (3) ainsi que les têtes de dent (2) sont enveloppés.

4. Stator (1) selon l'une des revendications précédentes, **caractérisé en ce que** la résistance magnétique du trajet de flux supérieur ne se différentie que légèrement de la résistance magnétique du trajet de flux inférieur par le biais du pied de dent (3) et de la culasse intérieure, le trajet de flux supérieur désignant le trajet de flux magnétique qui se produit lorsque les bobines du côté extérieur (5) sont alimentées électriquement, et le trajet de flux inférieur désignant le trajet de flux magnétique qui se produit lorsque les bobines du côté intérieur (6) sont alimentées électriquement.

5. Stator (1) selon l'une des revendications précédentes, **caractérisé en ce que** l'enroulement est bobiné au moyen du bobinage par volant, bobinage par enfilage ou bobinage à aiguille.

6. Stator (1) selon la revendication 4, **caractérisé en ce que** les dents de stator sont configurées de telle sorte que les bobines (5, 6) autour des pieds de dent (3) et les bobines (5, 6) autour des têtes de dent (2) présentent des paramètres similaires comme, par exemple, un enchaînement des flux similaire.

7. Stator (1) selon l'une des revendications précédentes, **caractérisé en ce que** seules des dents de stator (4) regroupées se trouvent sur le pourtour du stator.

8. Stator (1) selon l'une des revendications précédentes, **caractérisé en ce que** pour une phase, les bobines (5, 6) de dents de stator (4) voisines qui sont alimentées électriquement en même temps sont enroulées en sens inverse.

9. Stator (1) selon l'une des revendications précédentes, **caractérisé en ce que** des dents de stator (4, 4') ayant une première et une deuxième forme géométrique sont disposées en alternance sur le pourtour du stator, de sorte que des rainures (7) asymétriques se forment entre les dents de stator (4, 4').

10. Stator (1) selon la revendication 8, **caractérisé en ce que** les pieds de dent (3) de l'une des deux formes géométriques ne sont pas enveloppés par les bobines (6).

11. Stator (1) selon la revendication 1, **caractérisé en ce que** toutes les branches de l'enroulement sont enroulées à la fois au niveau des pieds de dent (3) et au niveau des têtes de dent (2) et se comportent de manière symétrique.

12. Stator (1) selon la revendication 10, **caractérisé en ce que** toutes les bobines (5, 6) sont enroulées dans le même sens sur les têtes de dent (2) ou les pieds de dent (3).
